# EUROPÄISCHE PATENTSCHRIFT

(11) **EP 4 485 595 B1**
(45) Veröffentlichungstag und Bekanntmachung des Hinweises auf die Patenterteilung: **11.11.2026**
(21) Anmeldenummer: 24179906.3
(22) Anmeldetag: 04.06.2024
(51) Int. Cl.: H01M 10/04, H01M 10/613, H01M 10/647, H01M 10/6557, H01M 10/6567, H01M 50/209, H01M 10/625, H01M 10/6556

(54) **ENERGIESPEICHERVORRICHTUNG MIT KÜHLKÖRPERN UND DRUCKEINSTELLEINRICHTUNG**
ENERGY STORAGE DEVICE WITH COOLING BODIES AND PRESSURE ADJUSTMENT DEVICE
DISPOSITIF DE STOCKAGE D'ÉNERGIE AVEC DISSIPATEURS DE CHALEUR ET DISPOSITIF DE RÉGLAGE DE PRESSION

(30) Priorität: 28.06.2023 DE 102023116985
(43) Veröffentlichungstag der Anmeldung: 01.01.2025
(73) Patentinhaber: MAN Truck & Bus SE, 80995 München (DE)
(72) Erfinder: Wolfrum, Matthias, 80995 München (DE); Kempe, Thomas, 80995 München (DE); Schmidt, Stefan, 80995 München (DE)
(74) Vertreter: v. Bezold & Partner Patentanwälte - PartG mbB

(56) Entgegenhaltungen:
- CN-A- 114 883 684
- DE-A1- 102018 008 618
- DE-A1- 102018 212 627
- DE-A1- 102020 121 498

## Beschreibung

Die Erfindung betrifft eine Energiespeichervorrichtung zur Speicherung elektrischer Energie, vorzugsweise für ein zumindest teilweise elektrisch angetriebenes Fahrzeug, und ein Fahrzeug, vorzugsweise Nutzfahrzeug, aufweisend die Energiespeichervorrichtung.

Zunächst ist bezüglich des Stands der Technik auf die Dokumente DE 10 2020 121 498 A1, DE 10 2018 212 627 A1 und DE 10 2018 008 618 A1 zu verweisen.

Das Dokument DE 10 2020 121 498 A1 beschreibt eine Energiespeichervorrichtung zur Speicherung elektrischer Energie. Die Energiespeichervorrichtung weist eine Mehrzahl von stapelartig nebeneinander angeordneten Speicherzellen und eine Kühlvorrichtung zur Kühlung der Speicherzellen auf. Die Kühlvorrichtung weist eine mit einem Kühlmittel durchströmbare Kühlplatte auf, die seitlich in Bezug auf die Speicherzellen angeordnet ist. Die Kühlvorrichtung weist ferner zumindest einen mit dem Kühlmittel durchströmbaren Kühlkörper auf, der zwischen zwei benachbarten Speicherzellen zur Seitenflächenkühlung der Speicherzellen angeordnet ist, mit der Kühlplatte fluidisch in Verbindung steht und als Kühlkörper mit einer elastischen Hülle ausgebildet ist.

Das Dokument DE 10 2018 212 627 A1 betrifft eine Akkumulatoranordnung für ein Hybrid- oder Elektrofahrzeug. Die Akkumulatoranordnung weist mehrere starre Batteriezellen mit einander gegenüberliegenden Auflageflächen auf, wobei die Batteriezellen einander mit den Auflageflächen zugewandt in Stapelrichtung zu einem Batterieblock gestapelt sind. Die Akkumulatoranordnung weist ferner eine Kühlvorrichtung mit mehreren von dem Kühlfluid durchströmbaren Kühlelementen auf. Das jeweilige Kühlelement ist zwischen den benachbarten Batteriezellen angeordnet und mit diesen zu dem Batterieblock verspannt, wobei das jeweilige Kühlelement an den Auflageflächen der jeweiligen benachbarten Batteriezellen wärmeübertragend anliegt. Das jeweilige Kühlelement weist einen Rahmen auf, der die Auflageflächen der jeweiligen benachbarten Batteriezellen randseitig in Umlaufrichtung umläuft, so dass zwischen dem Rahmen und den benachbarten Batteriezellen ein durch das Kühlmittel durchströmbarer Innenraum des Kühlelements angeordnet ist.

Das Dokument DE 10 2018 008 618 A1 offenbart einen elektrischer Energiespeicher, insbesondere für ein Kraftfahrzeug, mit einer Mehrzahl von Batteriezellen und mit einer Kühleinrichtung zum Kühlen der Batteriezellen. Die Kühleinrichtung umfasst wenigstens eine von einem Kühlmittel durchströmbare Kühlplatte und weist wenigstens ein Element auf, welches in Abhängigkeit von einer Änderung eines Volumens der Batteriezellen verformbar ist.

Aus der Praxis bekannte Fahrzeugbatterien, wie sie z. B. als Energiespeicher bzw. als Traktionsbatterie in Hybridfahrzeugen oder Elektrofahrzeugen zum Einsatz kommen, verfügen typischerweise über mehrere Batterie-Speicherzellen, die z.B. stapelartig angeordnet sind. Die Batterie-Speicherzellen werden typischerweise durch (z. B. aus Kunststoff gefertigte) Distanzstücke voneinander getrennt. Die Batterie-Speicherzellen (z. B. Lithium-Ionen-Speicherzellen) können sich beispielsweise alterungsbedingt über der Lebensdauer und/oder während des Ladens ausdehnen (sog. Zell-Swelling), was die Lebensdauer der Batterie-Speicherzellen mindern kann. Deswegen ist eine Vorspannkraft erforderlich, die der Ausdehnung der Batterie-Speicherzellen entgegenwirkt. Ferner ist zur Abfuhr der im Betrieb entstehenden Abwärme meist eine Möglichkeit der Kühlung der Batterie-Speicherzellen bereitgestellt. Zur Vorspannung erfolgt der Verbau üblicherweise in einer steifen Rahmenstruktur. Zur Kühlung ist meist eine unter den Zellen liegende Kühlplatte vorgesehen.

Diese bekannten Techniken weisen mehrere Nachteile auf: Einerseits ist die Wärmeübertragung zwischen den Speicherzellen und der Kühlplatte meist nur unzureichend. Andererseits ist mittels bekannter Techniken lediglich eine konstante, nicht-variable Vorspannkraft (z. B. initial bei der Montage) aufbringbar. Da sich der Ausdehnungszustand der Batterie-Speicherzellen aber (z. B. über der Lebensdauer) verändert, sind die Batterie-Speicherzellen durch diese initiale Vorspannkraft nicht immer optimal verspannt.

In Hinblick auf die aus der Praxis bekannten Lösungen besteht ein Bedarf, die bekannten Techniken dahingehend zu verbessern, dass insbesondere die Leistungsfähigkeit und/oder die Lebensdauer der Batterie-Speicherzellen erhöht wird.

Diese Aufgaben werden durch eine Energiespeichervorrichtung mit den Merkmalen der unabhängigen Ansprüche gelöst. Vorteilhafte Weiterbildungen sind in den abhängigen Ansprüchen und der Beschreibung angegeben.

Ein Grundgedanke der Erfindung liegt darin, mit einem Kühlmittel durchströmbare Kühlkörper mit einer elastischen Hülle bereitzustellen, die in einer Art Doppelfunktion einerseits eine Seitenflächentemperierung der Speicherzellen ermöglichen und andererseits über eine gezielte Einstellung des Kühlmitteldrucks in Abhängigkeit des Ausdehnungszustands der Speicherzellen eine variierbare Verspannkraft auf die Speicherzellen aufbringen.

Ein erster unabhängiger Aspekt der vorliegenden Offenbarung betrifft eine Energiespeichervorrichtung zur Speicherung elektrischer Energie, bevorzugt für ein zumindest teilweise elektrisch angetriebenes Fahrzeug.

Die Energiespeichervorrichtung weist mehrere stapelartig (z. B. nebeneinander und/oder hintereinander) angeordnete Speicherzellen und eine mit einem Kühlmittel durchströmbare Kühlplatte auf. Die Kühlplatte ist seitlich (z. B. bodenseitig, an der unteren Seite) in Bezug auf die mehreren Speicherzellen angeordnet.

Die Energiespeichervorrichtung weist ferner mehrere mit dem Kühlmittel durchströmbare Kühlkörper auf. Zwischen zwei benachbarten Speicherzellen ist jeweils einer der mehreren Kühlkörper angeordnet. Die mehreren Kühlkörper stehen jeweils mit der Kühlplatte fluidisch in Verbindung und sind ferner jeweils als Kühlkörper mit einer (z. B. elastisch) verformbaren Hülle ausgebildet. Die mehreren Kühlkörper können z. B. jeweils als Gappad ausgeführt sein, das mit der Kühlplatte fluidisch verbunden ist.

Die Energiespeichervorrichtung weist ferner eine Druckeinstelleinrichtung, vorzugsweise zum Einstellen einer auf die mehreren Speicherzellen wirkenden Verspannkraft, auf. Die Druckeinstelleinrichtung ist ausgebildet, in Abhängigkeit eines Ausdehnungszustands der mehreren Speicherzellen und/oder einer hiermit korrelierenden Größe einen Kühlmitteldruck in den mehreren Kühlkörpern einzustellen. Ein Beispiel für eine mit dem ausdehnungszustand korrelierende Größe ist eine auf die Speicherzellen wirkende Verspannkraft oder Schwellkraft, die z. B. durch lediglich beispielhaft mittels Kraftsensoren gemessen werden kann.

Ein Vorteil kann darin liegen, dass eine Seitenflächenkühlung der Speicherzellen durch eine Wärmeübertragung von den Speicherzellen über die Kühlkörper zu der Kühlplatte (und umgekehrt) bereitgestellt und/oder verbessert wird. Dadurch kann eine Seitenflächentemperierung der Speicherzellen umgesetzt werden. Ferner kann die auf die Speicherzellen wirkende Verspannkraft über eine gezielte Einstellung des Kühlmitteldrucks verändert werden, z. B. gezielt an den vorliegenden Ausdehnungszustand der Speicherzellen angepasst werden. Beispielsweise kann ein vollflächiges Anliegen des jeweiligen Kühlkörpers an den Speicherzellen erreicht werden. Ferner ändern sich die auf die Speicherzellen wirkende Verspannkräfte abhängig von Ausdehnungsbewegungen, sog. Swelling-Bewegungen, der Speicherzellen, die durch Lade- und Entladevorgänge und durch Alterungseffekte verursacht werden. Die Druckeinstelleinrichtung kann z. B. ausgebildet sein, in Reaktion auf solche Swelling-Bewegungen der Speicherzellen den Kühlmitteldruck und damit die auf die Speicherzellen wirkende Verspannkräfte anzupassen. Mit anderen Worten kann eine Kühlung der Speicherzellen und eine gleichzeitige Einstellbarkeit der Verspannkraft (Vorspannkraft) auf die Speicherzellen über einstellbaren Innendruck in den Kühlkörpern erreicht werden. Vorteilhaft kann somit die Verspannkraft (Vorspannkraft) beim Durchströmen der Kühlkörper, z. B. ausgeführt als dünnwandige Gappads, über einen konstanten Kühlmittelduck voreingestellt und/oder über den Lebenszyklus variiert werden. Beide Maßnahmen können die Leistungsfähigkeit und Lebensdauer der verbauten Lithium-Ionen-Zellen verbessern. Dies kann sich insgesamt vorteilhaft auf die Lebensdauer der Speicherzellen und/oder die Wärmeübertragung zwischen Speicherzellen und Kühlkörpern auswirken. Ferner kann dadurch die Leistungsfähigkeit der Energiespeichervorrichtung verbessert werden, da die zur Verfügung stehende Kontaktfläche zwischen Speicherzellen und Kühlkörper als Temperierfläche (z. B. Kühlfläche) genutzt wird und die Speicherzellen über die Seitenflächentemperierung so in einem bestimmten Temperaturbereich gehalten werden können.

Um den Ausdehnungszustand der Speicherzellen zu ermitteln, ist es beispielsweise denkbar, dass die Druckeinstelleinrichtung auf hinterlegte Druckverläufe (z. B. auf Kennlinien oder Tabellen mit Erfahrungswerten) zurückgreift. Denkbar ist aber auch, dass die Druckeinstelleinrichtung auf Daten einer Sensoreinrichtung der Energiespeichervorrichtung zurückgreift, die den tatsächlich vorliegenden Ausdehnungszustand bestimmt. Beispielsweise kann die Sensoreinrichtung auf den Speicherzellen angebrachte Kraftsensoren, z. B. Dehnmessstreifen (z. B. je ein Dehnmessstreifen auf jeder Speicherzelle) umfassen, die in Signalverbindung mit der Druckeinstelleinrichtung stehen und den tatsächlichen Ausdehnungszustand als Datenwert an die Druckeinstelleinrichtung übermitteln. Mit anderen Worten kann die Druckeinstelleinrichtung ausgebildet sein, den Ausdehnungszustand sensorisch (z. B. mittels der Dehnmessstreifen oder optischer Sensoren, etc.) oder empirisch (z. B. mittels in der Druckeinstelleinrichtung hinterlegten Kennlinien oder Tabellen, etc.) zu ermitteln.

Der Ausdehnungszustand (z. B. Schwellzustand oder Swelling-Zustand) der Speicherzelle ist beispielsweise eine alterungsbedingte und/oder ladebedingte Veränderung des Speicherzellvolumens. Vorstehend wurde bereits festgestellt, dass die Druckeinstelleinrichtung den Kühlmitteldruck abhängig vom Ausdehnungszustand oder einer hiermit korrelierenden Größe einstellen kann. Als eine solche Größe kann jede andere Größe verstanden werden, die mit einer Änderung einer Form, einer Abmessung oder einer Gestalt der Speicherzellen korreliert, also einer Größe aus der der momentane Ausdehnungszustand z.B. abgeleitet werden kann.

Über die Einstellung des Kühlmitteldrucks kann z. B. eine Nachgiebigkeit oder Festigkeit der Kühlkörper oder einer damit korrelierenden Größe beeinflussbar sein. Die Kühlkörper sind bevorzugt dünnwandig (und weist z. B. eine Dicke im Bereich weniger Zehntel Millimeter auf). Es ist denkbar, dass der Kühlmitteldruck eine zwischen zwei benachbarten Speicherzellen und dem jeweils dazwischen angeordneten Kühlkörper wirkende Flächenpressung beeinflusst. Beispielsweise kann die Druckeinstelleinrichtung ausgebildet sein, den Kühlmitteldruck derart einzustellen, dass eine Flächenpressung zwischen dem jeweiligen Kühlkörper und den Speicherzellen unterhalb eines vorbestimmten (z. B. in der Druckeinstelleinrichtung hinterlegten und über die Lebensdauer und/oder der Betriebszeit variablen) Grenzwerts gehalten wird.

Die mehreren Kühlkörper können mit der Kühlplatte (z. B. zur Ausbildung einer fluiddichten Verbindung) stoffschlüssig verbunden sein, beispielsweise verklebt, verschweißt und/oder verlötet sein.

Die Speicherzellen können z. B. Lithium-Ionen-Zellen sein. Ferner können die Speicherzellen Teil eines Batteriezellenstapels oder eines Batteriepacks sein.

Der Kühlmitteldruck wirkt über die verformbare Hülle als die Verspannkraft auf die Speicherzellen. Die Druckeinstelleinrichtung kann ausgebildet sein, den Kühlmitteldruck so einzustellen (z. B. oberhalb eines bestimmten Grenzwerts zu halten), dass der Kühlmitteldruck als die Verspannkraft auf die Speicherzellen wirkt.

In einem besonders bevorzugten Ausführungsbeispiel kann die Energiespeichervorrichtung einen Rahmen zur Aufnahme der auf die mehreren Speicherzellen wirkenden Verspannkraft aufweisen. Der Rahmen kann die mehreren Speicherzellen und die mehreren Kühlkörper zumindest abschnittsweise umgeben. Der Rahmen kann die mehreren Speicherzellen mit den jeweils dazwischen angeordneten Kühlkörpern aufnehmen. Somit können die mehreren Speicherzellen sowie die mehreren Kühlkörper vor schädlichen äußeren Einflüssen geschützt sein.

In einem Ausführungsbeispiel kann der Rahmen zwei Seitenabschnitte aufweisen, die sich in einer Stapelrichtung der mehreren Speicherzellen gegenüberliegen. Die mehreren Speicherzellen und die mehreren Kühlkörper können zwischen den Seitenabschnitten durch die Verspannkraft verspannbar und/oder verklemmbar sein. Bevorzugt sind die Speicherzellen vollfächig zwischen den zwei Seitenabschnitten verpannbar und/oder verklemmbar. Dies kann zu vorzugsweise konstanten Druckspannungen in den Wandungen der Kühlkörper und/oder Speicherzellen führen, die den im Betrieb wirkenden Zugspannungen entgegenwirken und die Belastung für die der Kühlkörper und/oder Speicherzellen so mindern können. Ferner kann einer Ausdehnung der Speicherzellen in Stapelrichtung besonders effektiv entgegengewirkt werden.

Der Rahmen kann zudem einen Rahmenbereich zum Begrenzen einer Ausdehnungsbewegung der mehreren Kühlkörper in einer Querrichtung und/oder einer Hochrichtung des elektrischen Energiespeichers aufweisen. Dieser Rahmenbereich kann der Kühlplatte abgewandten Kopfbereichen der mehreren Kühlkörper und/oder in der Querrichtung gegenüberliegenden Flankenbereichen der mehreren Kühlkörper zugeordnet (z. B. unmittelbar benachbart zu diesen angeordnet) sein. Alternativ oder ergänzend kann der Rahmenbereich die der Kühlplatte abgewandten Kopfbereiche der mehreren Kühlkörper und/oder die in der Querrichtung gegenüberliegenden Flankenbereiche im Betrieb der Energiespeichervorrichtung kontaktieren und/oder anliegen und/oder sich abstützen. Bevorzugt handelt es sich bei dem Rahmenbereich um mehrere Rahmenstreben. Die Rahmenstreben sind bevorzugt ausschließlich oberhalb der Kopfbereiche und/oder seitlich der Flankenbereiche angeordnet (und optional nicht oberhalb und/oder seitlich der Speicherzellen). Vorzugsweise liegen die Kopfbereiche und/oder die Flankenbereiche direkt an dem Rahmenbereich an. Die Querrichtung ist z.B. quer (bevorzugt orthogonal) zur Stapelrichtung orientiert. Die Hochrichtung ist z. B. ebenfalls quer (bevorzugt orthogonal) zur Stapelrichtung und quer (bevorzugt orthogonal) zur Querrichtung orientiert. Dadurch können vorteilhaft innerhalb der verformbaren Hülle auftretende Spannungen reduziert werden.

In einem Ausführungsbeispiel kann die Druckeinstelleinrichtung ausgebildet sein, den Kühlmitteldruck zur Erhöhung der Lebensdauer der Energiespeichervorrichtung so einzustellen, dass die auf die Speicherzellen wirkende Verspannkraft in einem Sollbereich liegt, wobei der Sollbereich ein sich über der Lebensdauer und/oder der Betriebszeit der Energiespeichervorrichtung variierender Sollbereich ist. Der Sollbereich kann z. B. als Datensatz in der Druckeinstelleinrichtung hinterlegt sein. Die Druckeinstelleinrichtung kann, lediglich beispielhaft, ausgebildet sein, den Kühlmitteldruck über die Lebensdauer der Energiespeichervorrichtung zu reduzieren, um eine Zunahme der Verspannkraft, die z. B. durch die alterungsbedingte Zunahme der Ausdehnung (Swelling) der Speicherzellen zumindest teilweise zu kompensieren. Dadurch kann sich z. B. ein über der Lebensdauer reduzierter Anstieg der Verspannkraft ergeben. Dies kann die Lebensdauer der Speicherzellen weiter erhöhen. Die Druckeinstelleinrichtung kann ferner, lediglich beispielhaft, ausgebildet sein, den Kühlmitteldruck während eines Lade- und anschließenden Entladevorgang zu variieren, um die auf die Speicherzellen wirkende Verspannkraft während des Lade- und anschließenden Entladevorgangs in einem vorbestimmten Sollbereich zu halten.

In einem Ausführungsbeispiel können die mehreren Kühlkörper im in der Energiespeichervorrichtung eingebauten Zustand, in einer Querrichtung des elektrischen Energiespeichers und/oder in einer Hochrichtung des elektrischen Energiespeichers gesehen, im Wesentlichen die gleichen Außenabmessung wie die Speicherzellen aufweisen. Denkbar ist beispielsweise, dass die mehreren Kühlkörper, im eingebauten Zustand, eine gleiche maximale Breite und/oder maximale Höhe aufweisen wie die Speicherzellen. Die Speicherzellen können somit mit ihren gesamten Seitenflächen an dem jeweiligen Kühlkörper anliegen, was die Wärmeübertragung und/oder die Verspannung der Speicherzellen verbessern kann.

In einem Ausführungsbeispiel kann die Druckeinstelleinrichtung ausgebildet sein, den Kühlmitteldruck so einzustellen, dass einander zugewandte Seitenflächen der zwei Speicherzellen und des jeweils dazwischen angeordneten Kühlkörpers vollflächig aneinander anliegen.

In einem Ausführungsbeispiel kann die Energiespeichervorrichtung mindestens einen weiteren, mit dem Kühlmittel durchströmbaren Kühlkörper aufweisen. Der mindestens eine weitere Kühlkörper kann mit der Kühlplatte fluidisch in Verbindung stehen. Ferner kann der mindestens eine weitere Kühlkörper als Kühlkörper mit einer (z. B. elastisch) verformbaren (z. B. biegsamen und/oder folienartigen und/oder nachgiebigen) Hülle ausgebildet sein. Der mindestens eine weitere Kühlkörper kann an einer stirnseitigen Außenfläche der stapelartig angeordneten Speicherzellen angeordnet sein. Mit anderen Worten können die stapelartig angeordneten Speicherzellen sowie die jeweils zwischen zwei Speicherzellen angeordneten Kühlkörper einen Stapel bilden, an dessen beiden stirnseitig gegenüberliegenden Außenflächen jeweils ein weiterer Kühlkörper angeordnet ist. Bevorzugt ist der mindestens eine weitere Kühlkörper zwischen einem der Seitenabschnitte des Rahmens und der stirnseitigen Außenfläche angeordnet. Der mindestens eine weitere Kühlkörper kann alle Merkmale der hierin offenbarten mehreren Kühlkörper aufweisen. Dadurch kann sich auch für die erste und die letzte der stapelartig angeordneten Speicherzellen vorteilhaft eine beidseitige Wärmeabfuhr und Verpressung ergeben.

In einem Ausführungsbeispiel kann die verformbare Hülle in einem nicht montierten Zustand, des jeweiligen Kühlkörpers, d. h. im nicht zwischen zwei benachbarten Speicherzellen eingebauten Zustand, eine konvexe und/oder bauchige Außenkontur aufweisen. Mit anderen Worten können die quer (bevorzugt orthogonal) zur Stapelrichtung orientierten Seitenflächen des jeweiligen Kühlkörpers konvex und/oder bauchig geformt sein.

In einem Ausführungsbeispiel kann die konvexe und/oder bauchige Außenkontur in einem montierten Zustand des jeweiligen Kühlkörpers zum Ausbilden einer Übermaßpassung zwischen zwei benachbarten Speicherzellen und dem jeweils dazwischen angeordneten Kühlkörper verformt sein. Mit anderen Worten kann der jeweilige Kühlkörper in Stapelrichtung gesehen im nicht-montierten Zustand eine Außenabmessung (z. B. Dicke) aufweisen, die größer ist als der durch zwei benachbarte Speicherzellen gebildete Zwischenraum entlang der Stapelrichtung. Die konvexe und/oder bauchige Außenkontur kann ein vollflächiges Verpressen und/oder vollflächiges Anliegen der Kühlkörper an den Speicherzellen ermöglichen und/oder unterstützen. Es ist denkbar, dass das Verpressen zu einer konstanten Druckspannung in der verformbaren Hülle führt, welche den im Betrieb wirkenden Zugspannungen entgegenwirken. Dadurch kann eine Belastung der verformbaren Hülle im Betrieb der Energiespeichervorrichtung verringert werden.

In einem Ausführungsbeispiel kann die verformbare Hülle ein unlegiertes Aluminiummaterial und/oder eine Aluminium-Legierung aufweisen. Bevorzugt weist die Aluminium-Legierung einen Kupferanteil und/oder einen Mangananteil und/oder einen Siliziumanteil und/oder einen Magnesiumanteil auf. Es ist denkbar, dass die Aluminium-Legierung niedriglegiert ist. Dadurch kann die Wärmeleitfähigkeit und/oder Festigkeit der Hülle weiter verbessert werden.

In einem Ausführungsbeispiel können die mehreren Kühlkörper jeweils eine Prägung und/oder eine Innenstruktur und/oder eine Vertiefung aufweisen, die ausgebildet ist, eine Kühlkanalkontur im Innern der Kühlkörper auszubilden und/oder einen Innenraum des jeweiligen Kühlkörpers zu unterteilen, um das Kühlmittel durch den Kühlkörper zu leiten, z.B. mäanderförmig und/oder schlangenförmig und/oder mehrfach umgelenkt durch den Kühlkörper zu leiten. Denkbar ist, dass mittels der Prägung und/oder der Innenstruktur und/oder der Vertiefung in dem Innenraum eine Kühlmittelführung ausgebildet wird. Die Innenstruktur kann bspw. durch Schweiß-, Löt- oder Klebeverfahren hergestellt sein. Bevorzugt ist die Vertiefung bspw. mittels Tiefziehen auf die Kühlkörper aufgebracht. Alternativ ist eine Formgebung per Innendruck (z. B. mittels eines Aufblasverfahren) denkbar. Dadurch kann sich eine besonders effektive Temperierung der Speicherzellen ermöglicht werden.

In einem Ausführungsbeispiel können die mehreren Kühlkörper jeweils einen Kühlmitteleingang und einen Kühlmittelausgang aufweisen, über die der jeweilige Kühlkörper mit der Kühlplatte fluidisch in Verbindung steht. Der Kühlmitteingang und der Kühlmittelausgang kann an, quer zu einer Stapelrichtung der Speicherzellen gesehen, gegenüberliegenden Endbereichen des jeweiligen Kühlkörpers angeordnet sein. Alternativ oder ergänzend kann der Kühlmitteingang und der Kühlmittelausgang mit der Kühlplatte und/oder mit einer Kühlmittelführung der Kühlplatte stoffschlüssig verbunden (z. B. verklebt und/oder verlötet und/oder verschweißt) sein. Mittels des Kühlmitteleingangs und Kühlmittelausgangs kann ein fluiddichter Anschluss an die Kühlmittelführung der Kühlplatte ermöglicht werden.

In einem Ausführungsbeispiel können die mehreren Kühlkörper jeweils einteilig ausgeführt sein. Alternativ dazu können die mehreren Kühlkörper jeweils aus mehreren (z. B. halbschalenförmigen) Teilen zusammengesetzt sein. Die mehreren Teile können stoffschlüssig verbunden sein (z. B. mittels Kleben und/oder Löten und/oder Schweißen).

Ein weiterer Aspekt betrifft ein Fahrzeug aufweisend eine Energiespeichervorrichtung wie hierin offenbart. Bevorzugt ist das Fahrzeug ein Nutzfahrzeug. In letztgenanntem Fall kann es sich bei dem Fahrzeug mit anderen Worten um ein Kraftfahrzeug handeln, das durch seine Bauart und Einrichtung zur Beförderung von Personen, zum Transport von Gütern oder zum Ziehen von Anhängerfahrzeugen ausgelegt ist. Beispielsweise kann es sich bei dem Fahrzeug um einen Lastkraftwagen, einen Omnibus und oder einen Sattelzug handeln, der zumindest teilweise elektrisch angetrieben ist. Es ist jedoch auch denkbar, dass das Fahrzeug ein Schienenfahrzeug oder Flugzeug ist. Das Fahrzeug kann zumindest teilweise elektrisch angetrieben sein.

Die zuvor beschriebenen bevorzugten Ausführungsformen und Merkmale der Erfindung sind beliebig miteinander kombinierbar.

Einzelheiten und Vorteile der Erfindung werden im Folgenden unter Bezug auf die beigefügte Zeichnung beschrieben. Es zeigen:
- Figur 1: einen elektrischen Energiespeicher aus dem Stand der Technik;
- Figur 2: eine Energiespeichervorrichtung gemäß einer Ausführungsform in der Seitenansicht;
- Figur 3A: einen Kühlkörper (Schnittdarstellung) gemäß einer Ausführungsform in der Draufsicht im nicht-montierten Zustand;
- Figur 3B: eine Energiespeichervorrichtung gemäß einer Ausführungsform in der Seitenansicht im montierten Zustand;
- Figur 4: eine Energiespeichervorrichtung gemäß einer Ausführungsform in der Draufsicht;
- Figur 5A: eine Kühlplatte und einen Kühlkörper (Schnittdarstellung) in der Vorderansicht; und
- Figur 5B: den Kühlkörper aus Figur 5a (Schnittdarstellung) in der Draufsicht.

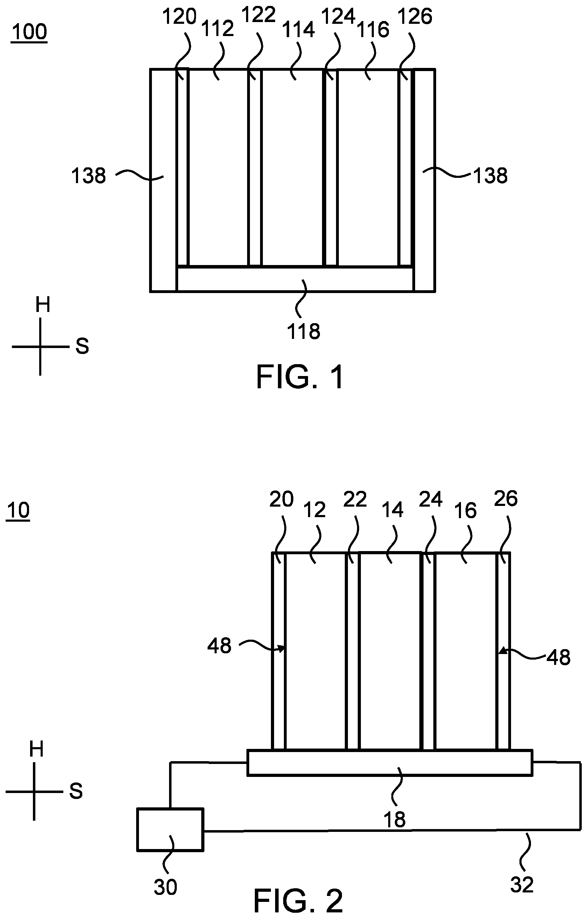

Figur 1 zeigt einen herkömmlichen elektrischen Energiespeicher 100 aus dem Stand der Technik.

Herkömmliche elektrische Energiespeicher 100 weisen typischerweise mehrere benachbarte Speicherzellen 112, 114, 116 auf, zwischen denen Distanzstücke 122, 124 angeordnet sind. Ferner können Distanzstücke 120, 126 an den Außenflächen der benachbarten Speicherzellen 112, 114, 116 angeordnet sein. Unterhalb der Speicherzellen ist zur Temperierung der Speicherzellen 112, 114, 116 typischerweise eine Kühlplatte 118 angeordnet. Die Speicherzellen 112, 114, 116 sind meist in einer Rahmenkonstruktion 138 aufgenommen.

Diese bekannten elektrischen Energiespeicher weisen z. B. die Nachteile auf, dass die Speicherzellen über die Kühlplatte 118 meist nur unzureichend temperierbar sind, weil über die vergleichsweise großen Seitenflächen keine oder nur eine unzureichend große Wärmemenge auf die Kühlplatte 118 übertragbar ist. Ferner können sich die Speicherzellen 112, 114, 116, z. B. aufgrund von Alterungsprozessen und/oder während eines Ladevorgangs, ausdehnen. Dies kann sich negativ auf die Lebensdauer der Speicherzellen 112, 114, 116 auswirken.

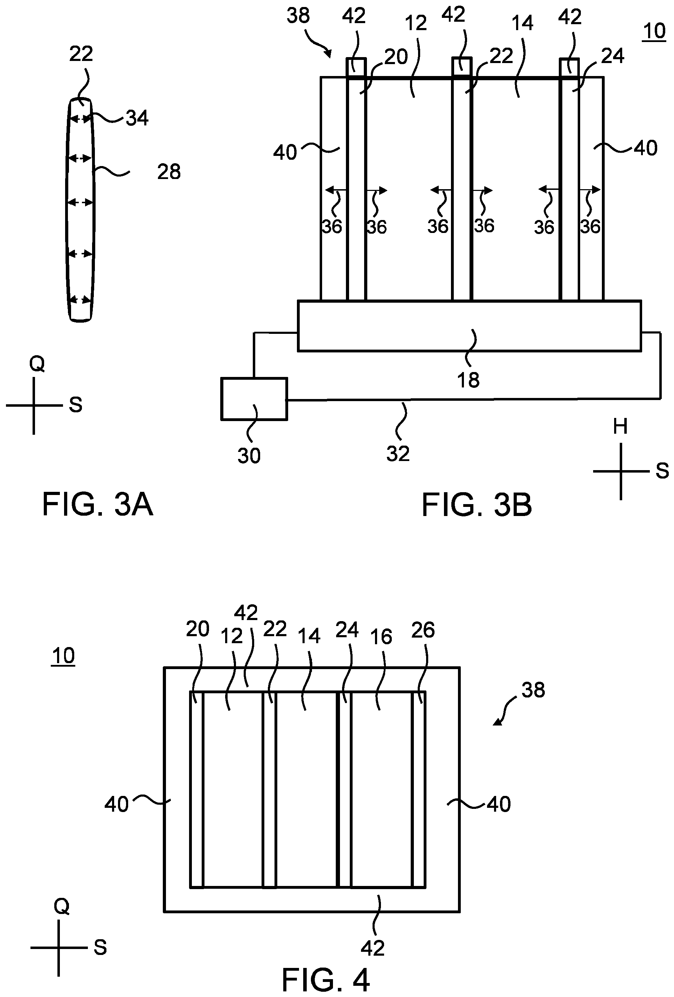

Figur 2 zeigt eine Energiespeichervorrichtung 10 gemäß einer Ausführungsform in der Seitenansicht. Zunächst soll anhand der Figur 2 lediglich der strukturelle Aufbau der Energiespeichervorrichtung 10 verdeutlicht werden. Die Funktion der Energiespeichervorrichtung 10 wird dann anhand der Figuren 3A und 3B erläutert.

Die Energiespeichervorrichtung 10 weist mehrere in einer Stapelrichtung S stapelartig angeordnete Speicherzellen 12, 14, 16 auf. In Figur 2 sind lediglich exemplarisch zur Vereinfachung der Darstellung drei Speicherzellen 12, 14, 16 gezeigt, wobei die Energiespeichervorrichtung 10 natürlich auch nur zwei Speicherzellen oder auch mehr als drei Speicherzellen aufweisen kann.

Zwischen jeweils zwei der mehreren Speicherzellen 12, 14, 16 ist je ein Kühlkörper 22, 24 angeordnet. Exemplarisch ist in der Figur 2 in einem zwischen der linken Speicherzelle 12 und der mittleren Speicherzelle 14 gebildeten Zwischenraum der Kühlkörper 22 angeordnet und in einem zwischen der mittleren Speicherzelle 14 und der rechten Speicherzelle 16 gebildeten Zwischenraum der Kühlkörper 24 angeordnet. An den stirnseitigen Außenflächen 48 sind zudem jeweils weitere Kühlkörper 20, 26 angeordnet. Die mehreren Kühlkörper 20, 22, 24, 26 sind z. B. hohl ausgeführt, mit einem Kühlmittel durchströmbar und stehen mit einer unterhalb der Speicherzellen 12, 14, 16 angeordneten Kühlplatte fluidisch in Verbindung. Die Kühlplatte 18 ist ebenfalls mit dem Kühlmittel durchströmbar und steht fluidisch in Verbindung mit einer Kühlmittelführung 32. Exemplarisch ist die Kühlmittelführung 32 als Kühlmittelkreislauf dargestellt. Für die Anbindungen an den Kühlkreislauf können Anschlüsse an die Kühlkörper angebracht sein. Dies kann durch Schweiß, Löten oder Kleben erfolgen. Gleiches gilt für eine Anbindung der Kühlkörper direkt an die unten liegenden Kühlplatte 18. Im Kühlmittelkreislauf ist eine Druckeinstelleinrichtung 30 angeordnet, die zur Einstellung eines Kühlmitteldrucks 34 in der Kühlplatte 18 und in den Kühlkörpern 20, 22, 24, 26 ausgebildet ist. Die Druckeinstelleinrichtung 30 kann den Kühlmitteldruck 34 also verändern bzw. auf einen vorbestimmbaren Wert einstellen oder regeln. Beispielsweise kann die Druckeinstelleinrichtung dazu eine Pumpe aufweisen. Ferner kann die Druckeinstelleinrichtung ein Steuergerät zur Steuerung der Pumpe aufweisen.

Die Figuren 3A und 3B zeigen einen Kühlkörper im nicht-montierten Zustand bzw. eine Energiespeichervorrichtung 10 gemäß einer Ausführungsform im montierten Zustand, anhand der nun die Funktionsweise Energiespeichervorrichtung 10 erläutert werden soll.

Die Kühlkörper 20, 22, 24 weisen eine (z. B. elastisch) verformbare Hülle auf. Die Kühlkörper 20, 22, 24 können auch als Gappad bezeichnet werden. Die Gappad sind jedoch fluidisch mit der Kühlplatte 18 verbunden. Die verformbare Hülle 28 ist dünnwandig (z. B. mit einer Dicke im Bereich weniger Zehntel Millimeter), z. B. folienartig und nachgiebig und biegsam, ausgeführt. In Figur 3B sind, lediglich exemplarisch, drei Kühlkörper 20, 22, 24 gezeigt, wobei die Anzahl der Speicherzellen 12,14 sowie der jeweils Kühlkörper 20, 22, 24 in weiteren Ausführungsformen grundsätzlich variieren kann. Wie in Figur 3A exemplarisch dargestellt, wirkt der über die Druckeinstelleinrichtung 30 veränderbare Kühlmitteldruck 34 innenseitig auf die verformbaren Hülle 28 des jeweiligen Kühlkörpers 20, 22, 24.

Im montierten Zustand der Energiespeichervorrichtung 10 (siehe Figur 3B) wirkt der Kühlmitteldruck 34 über die jeweilige verformbare Hülle 28 als Verspannkraft 36 auf die Speicherzellen 12, 14 und ferner auf zwei sich in der Stapelrichtung S gegenüberliegende Seitenabschnitte 40 eines Rahmens 38 der Energiespeichervorrichtung 10, in dem die Speicherzellen 12, 14 sowie die Kühlkörper 20, 22, 24 aufgenommen sind. Mittels der Verspannkraft 36 sind die Speicherzellen 12, 14 sowie die Kühlkörper 20, 22, 24 in dem Rahmen 38 verspannt bzw. verklemmt.

Wie in Figur 3A dargestellt, weist der Kühlkörper 22 in seinem nicht montierten Zustand eine konvexe und bauchige Außenkontur auf. Die konvexe und bauchige Außenkontur ist in dem montierten Zustand des Kühlkörpers 22 (siehe Figur 3B) zum Ausbilden einer Übermaßpassung zwischen den zwei benachbarten Speicherzellen 12, 14 und dem dazwischen angeordneten Kühlkörper 22 verformt.

Alterungsbedingt und/oder ladungsbedingt kann es zu einer Ausdehnung der Speicherzellen 12, 14 kommen. Damit einhergeht eine Veränderung der auf die Speicherzellen wirkenden Verspannkraft Um die Lebensdauer der Speicherzellen 12, 14 zu erhöhen, sollte wird diese Verspannkraft durch zweckmäßige Anpassung des Drucks in den Kühlkörpern (Gappads) in einem gewünschten Sollbereich gehalten.

Deswegen ist die Druckeinstelleinrichtung 390 ausgebildet, den Kühlmitteldruck 34 in den Kühlkörpern 20, 22, 24 in Abhängigkeit des Ausdehnungszustands (oder einer hiermit korrelierenden Größe, wie z. B. der Verspannkraft) anzupassen bzw. einzustellen. Im gezeigten Ausführungsbeispiel greift die Druckeinstelleinrichtung dazu - lediglich exemplarisch - auf Erfahrungswerte in Form eines in der Druckeinstelleinrichtung hinterlegten Datensatzes zurück. Lediglich beispielhaft umfasst dieser Datensatz empirisch ermittelte Ausdehnungswerte der Speicherzellen über deren Lebensdauer bzw. Lebenszyklus. Die Druckeinstelleinrichtung 30 vergleicht diese Ausdehnungswerte mit einem vorbestimmten, ebenfalls in der Druckeinstelleinrichtung 30 hinterlegten Sollbereich für eine insgesamt vergangene Betriebs- oder Einsatzdauer der Speicherzellen. Übersteigt der Ausdehnungswert den Sollbereich, passt die Druckeinstelleinrichtung 30 den Kühlmitteldruck 34 an. Die letztgenannten Aspekte sind lediglich exemplarisch zur Verdeutlichung der Funktionsweise der Energiespeichervorrichtung 10 zu verstehen. Die Energiespeichervorrichtung 10 soll nicht auf die vorgenannten Aspekte beschränkt sein.

Ferner ist in einer nicht gezeigten Ausführungsform denkbar, dass die Druckeinstelleinrichtung 30 den Ausdehnungszustand und/oder die auf die Speicherzellen wirkende Verspannkraft (Swelling-Kraft) sensorisch ermittelt, die z. B. mittels auf den Speicherzellen 12, 14 angebrachter Dehnungsmessstreifen ermittelt und an die Druckeinstelleinrichtung signaltechnisch übertragen wurden.

Die so über den eingestellten Kühlmitteldruck zwischen der verformbaren Hülle 28 und einer Seitenfläche einer der Speicherzellen 12, 14 wirkende Verspannkraft 36 wirkt einer (z. B. alterungsbedingten und/oder ladungsbedingten) unerwünschten Zunahme der auf die Speicherzellen 12, 14 wirkenden Verspannkraft entgegen, was die Lebensdauer der Speicherzellen 12, 14 erhöhen kann.

Neben den bereits beschriebenen Seitenabschnitten 40 kann der Rahmen 38 einen zusätzlichen Rahmenbereich 42 aufweisen.

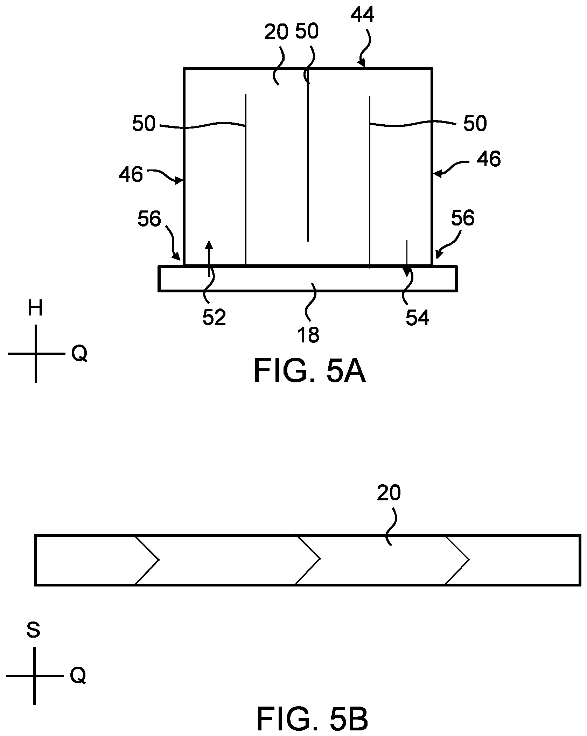

Der Rahmenbereich 42 weist in der gezeigten Ausführungsform Rahmenstreben auf, die jeweils Kopfbereichen 44 (siehe Figur 5A) der jeweiligen Kühlkörper 20, 22, 24 zugeordnet sind (z. B. unmittelbar benachbart zu diesen angeordnet sind) und diese kontaktieren. Der innenseitig auf die Kopfbereiche 44 wirkende Kühlmitteldruck 34 presst die Kopfbereiche 44 an die Rahmenstreben. Die Kühlkörper 12, 14 sind dadurch an einer Ausdehnung in der Hochrichtung H gehindert.

Figur 4 zeigt eine Energiespeichervorrichtung gemäß einer weiteren Ausführungsform in der Draufsicht (Schnittdarstellung).

Wie in der Figur ersichtlich, erstreckt sich der Rahmenbereich 42 entlang der Längsaußenseiten der stapelartig angeordneten Speicherzellen 12, 14, 16. Der innenseitig auf die Flankenbereiche 46 (siehe Figur 5A) wirkende Kühlmitteldruck 34 presst die Flankenbereiche 46 an den Rahmenbereich 42. Die Kühlkörper 12, 14 sind dadurch an einer Ausdehnung in einer Querrichtung Q gehindert.

Figur 5A zeigt eine Kühlplatte 18 und einen Kühlkörper 20 (Schnittdarstellung) in der Vorderansicht. Figur 5B zeigt den Kühlkörper 20 (Schnittdarstellung) in der Draufsicht.

Der Kühlkörper 20 weist einen Kühlmitteleingang 52 und einen Kühlmittelausgang 54 auf, über die der Kühlkörper 20 fluidisch mit der Kühlplatte 18 in Verbindung steht. Kühlmittel kann über den Kühlmitteleingang 52 von der Kühlplatte 18 in den Kühlkörper 20 eintreten und über den Kühlmittelausgang 54 von dem Kühlkörper 20 zurück in die Kühlplatte 18 eintreten. Der Kühlmitteingang 52 und der Kühlmittelausgang 54 sind an, quer zu der Stapelrichtung S gesehen, gegenüberliegenden Endbereichen 56 des Kühlkörpers 20 angeordnet. Das Kühlmittel durchströmt den Kühlkörper 20 damit zumindest abschnittsweise entlang der Querrichtung Q (siehe Figur 5B).

Zur Herstellung einer fluiddichten Verbindung kann der Kühlkörper 20 und/oder der Kühlmitteleingang 52 und der Kühlmittelausgang 54 z. B. stoffschlüssig mit der Kühlplatte 18 verbunden sein.

Der hohle Kühlkörper 20 begrenzt einen Innenraum. Der Kühlkörper 20 weist eine interne Kühlmittelführung auf. Diese kann z. B. durch eine Prägung 50 der Kühlkörper 20 realisiert sein, die den Innenraum so unterteilt, dass das Kühlmittel im Betrieb der Energiespeichervorrichtung 10 durch den Kühlkörper von dem Kühlmitteleingang 52 zum Kühlmittelausgang 54 geleitet wird, z. B. mäanderförmig (schlangenförmig) und/oder mehrfach umgelenkt geleitet wird. Mit anderen Worten kann der Kühlkörper 20 in seinem Innenraum eine Kühlmittelführung aufweisen, die ausgebildet ist, das Kühlmittel mäanderförmig und/oder mehrfach umgelenkt durch den Kühlkörper zu leiten.

Die Energiespeichervorrichtung 10 wie hierin offenbart kann Teil eines Fahrzeugs (nicht dargestellt) sein. Das Fahrzeug kann ein Kraftfahrzeug (z. B. PKW) und/oder ein Nutzfahrzeug sein. Bevorzugt ist das Fahrzeug ein rein elektrisch antreibbares Kraftfahrzeug. Die Energiespeichervorrichtung 10 kann zur Bereitstellung von Traktionsenergie ausgebildet sein.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 10: Energiespeichervorrichtung
- 12: Speicherzelle
- 14: Speicherzelle
- 16: Speicherzelle
- 18: Kühlplatte
- 20: Kühlkörper
- 22: Kühlkörper
- 24: Kühlkörper
- 26: Kühlkörper
- 28: verformbare Hülle
- 30: Druckeinstelleinrichtung
- 32: Kühlmittelführung
- 34: Kühlmitteldruck
- 36: Verspannkraft
- 38: Rahmen
- 40: Seitenabschnitte
- 42: Rahmenbereich
- 44: Kopfbereich
- 46: Flankenbereich
- 48: Außenflächen der mehreren Speicherzellen
- 50: Prägung
- 52: Kühlmitteleingang
- 54: Kühlmittelausgang
- 56: Endbereich

- 100: elektrischer Energiespeicher (Stand der Technik)
- 112: Speicherzelle (Stand der Technik)
- 114: Speicherzelle (Stand der Technik)
- 116: Speicherzelle (Stand der Technik)
- 118: Kühlplatte (Stand der Technik)
- 120: Distanzstück/Gappad (Stand der Technik)
- 122: Distanzstück/Gappad (Stand der Technik)
- 124: Distanzstück/Gappad (Stand der Technik)
- 126: Distanzstück/Gappad (Stand der Technik)
- 138: Rahmenstruktur (Stand der Technik)

- H: Hochrichtung
- Q: Querrichtung
- S: Stapelrichtung

## Patentansprüche

1. Energiespeichervorrichtung (10) zur Speicherung elektrischer Energie, vorzugsweise für ein zumindest teilweise elektrisch angetriebenes Fahrzeug, aufweisend:
mehrere stapelartig angeordnete Speicherzellen (12, 14, 16);
eine mit einem Kühlmittel durchströmbare Kühlplatte (18), die seitlich, vorzugsweise bodenseitig, in Bezug auf die mehreren Speicherzellen (12, 14, 16) angeordnet ist;
mehrere mit dem Kühlmittel durchströmbare Kühlkörper (22, 24), wobei zwischen zwei benachbarten Speicherzellen (12, 14; 14, 16) jeweils einer der mehreren Kühlkörper (22, 24) angeordnet ist und wobei die mehreren Kühlkörper (22, 24) jeweils mit der Kühlplatte (18) fluidisch in Verbindung stehen und ferner jeweils als Kühlkörper (22, 24) mit einer, vorzugsweise elastisch, verformbaren Hülle (28) ausgebildet sind; und
eine Druckeinstelleinrichtung (30) zum Einstellen einer auf die mehreren Speicherzellen (12, 14, 16) wirkenden Verspannkraft (36), **dadurch gekennzeichnet, dass** die Druckeinstelleinrichtung (30) ausgebildet ist, in Abhängigkeit eines Ausdehnungszustands der mehreren Speicherzellen (12, 14, 16) oder einer hiermit korrelierenden Größe einen Kühlmitteldruck (34) in den mehreren Kühlkörpern (22, 24) einzustellen, wobei der Kühlmitteldruck (34) über die verformbare Hülle (28) als die Verspannkraft (36) auf die Speicherzellen (12, 14, 16) wirkt.

2. Energiespeichervorrichtung (10) nach Anspruch 1, aufweisend einen Rahmen (38) zur Aufnahme der auf die mehreren Speicherzellen (12, 14, 16) wirkenden Verspannkraft (36), wobei der Rahmen (38) die mehreren Speicherzellen (12, 14, 16) und die mehreren Kühlkörper (22, 24) zumindest abschnittsweise umgibt.

3. Energiespeichervorrichtung (10) nach Anspruch 2, wobei der Rahmen (38) zwei Seitenabschnitte (40) aufweist, die sich in einer Stapelrichtung (S) der mehreren Speicherzellen (12, 14, 16) gegenüberliegen, wobei die mehreren Speicherzellen (12, 14, 16) und die mehreren Kühlkörper (22, 24) zwischen den Seitenabschnitten (40) durch die Verspannkraft (36) verspannbar und/oder verklemmbar sind.

4. Energiespeichervorrichtung (10) nach Anspruch 2 oder 3, wobei der Rahmen (38) einen Rahmenbereich (42) zum Begrenzen einer Ausdehnungsbewegung der mehreren Kühlkörper (22, 24) in einer Querrichtung (Q) und/oder einer Hochrichtung (H) der Energiespeichervorrichtung (10) aufweist, wobei der Rahmenbereich (42) der Kühlplatte (18) abgewandten Kopfbereichen (44) der mehreren Kühlkörper (22, 24) und/oder in der Querrichtung (Q) gegenüberliegenden Flankenbereichen (46) der mehreren Kühlkörper (22, 24) zugeordnet ist und/oder diese im Betrieb der Energiespeichervorrichtung (10) kontaktiert.

5. Energiespeichervorrichtung (10) nach einem der vorhergehenden Ansprüche, wobei die Druckeinstelleinrichtung (30) ausgebildet ist, den Kühlmitteldruck (34) zur Erhöhung der Lebensdauer der Energiespeichervorrichtung (10) so einzustellen, dass die auf die Speicherzellen (12, 14, 16) wirkende Verspannkraft (36) in einem Sollbereich liegt, wobei der Sollbereich ein sich über der Lebensdauer der Energiespeichervorrichtung (10) variierender Sollbereich ist.

6. Energiespeichervorrichtung (10) nach einem der vorhergehenden Ansprüche, wobei die mehreren Kühlkörper (22, 24) im in der Energiespeichervorrichtung (10) eingebauten Zustand, in einer Querrichtung (Q) der Energiespeichervorrichtung (10) und/oder in einer Hochrichtung (H) der Energiespeichervorrichtung (10) gesehen, im Wesentlichen die gleichen Außenabmessungen wie die Speicherzellen (12, 14, 16) aufweisen.

7. Energiespeichervorrichtung (10) nach einem der vorhergehenden Ansprüche, wobei die Druckeinstelleinrichtung (30) ausgebildet ist, den Kühlmitteldruck (34) so einzustellen, dass einander zugewandte Seitenflächen der zwei Speicherzellen (12, 14; 14, 16) und des jeweils dazwischen angeordneten Kühlkörpers (22, 24) vollflächig aneinander anliegen.

8. Energiespeichervorrichtung (10) nach einem der vorhergehenden Ansprüche, aufweisend mindestens einen weiteren, mit dem Kühlmittel durchströmbaren Kühlkörper (20, 26), der mit der Kühlplatte (18) fluidisch in Verbindung steht und ferner als Kühlkörper (20, 26) mit einer, vorzugsweise elastisch, verformbaren Hülle (28) ausgebildet ist, und der an einer stirnseitigen Außenfläche (48) der stapelartig angeordneten Speicherzellen (12, 14, 16) angeordnet ist, vorzugsweise zwischen einem der Seitenabschnitte (40) des Rahmens (38) und der stirnseitigen Außenfläche (48).

9. Energiespeichervorrichtung (10) nach einem der vorhergehenden Ansprüche, wobei die verformbare Hülle (28) in einem nicht montierten Zustand des jeweiligen Kühlkörpers (22, 24) eine konvexe und/oder bauchige Außenkontur aufweist.

10. Energiespeichervorrichtung (10) nach Anspruch 9, wobei die konvexe und/oder bauchige Außenkontur in einem montierten Zustand des jeweiligen Kühlkörpers (22, 24) zum Ausbilden einer Übermaßpassung zwischen zwei benachbarten Speicherzellen (12, 14; 14; 16) und dem jeweils dazwischen angeordneten Kühlkörper (22, 24) verformt ist.

11. Energiespeichervorrichtung (10) nach einem der vorhergehenden Ansprüche, wobei die verformbare Hülle (28) ein unlegiertes Aluminiummaterial und/oder eine Aluminium-Legierung, vorzugsweise mit einem Kupferanteil und/oder einem Mangananteil und/oder einem Siliziumanteil und/oder einem Magnesiumanteil, aufweist.

12. Energiespeichervorrichtung (10) nach einem der vorhergehenden Ansprüche, wobei die mehreren Kühlkörper (22, 24) jeweils eine Prägung (50) und/oder eine Innenstruktur und/oder eine Vertiefung aufweisen, die ausgebildet ist, einen Innenraum des jeweiligen Kühlkörpers (22, 24) zu unterteilen, um das Kühlmittel mäanderförmig und/oder schlangenförmig und/oder mehrfach umgelenkt durch den Kühlkörper (22, 24) zu leiten.

13. Energiespeichervorrichtung (10) nach einem der vorhergehenden Ansprüche, wobei die mehreren Kühlkörper (22, 24) jeweils einen Kühlmitteleingang (52) und einen Kühlmittelausgang (54) aufweisen, über die der jeweilige Kühlkörper (22, 24) mit der Kühlplatte (18) fluidisch in Verbindung steht, wobei:
der Kühlmitteingang (52) und der Kühlmittelausgang (54) an, quer zu einer Stapelrichtung (S) der Speicherzellen (12, 14, 16) gesehen, gegenüberliegenden Endbereichen (56) des jeweiligen Kühlkörpers (22, 24) angeordnet sind; und/oder
der Kühlmitteingang (52) und der Kühlmittelausgang (54) mit der Kühlplatte (18) und/oder mit einer Kühlmittelführung der Kühlplatte (18) stoffschlüssig verbunden, vorzugsweise verklebt und/oder verlötet und/oder verschweißt, sind.

14. Energiespeichervorrichtung (10) nach einem der vorhergehenden Ansprüche, wobei die mehreren Kühlkörper (22, 24):
jeweils einteilig ausgeführt sind; oder
jeweils aus mehreren, vorzugsweise halbschalenförmigen, Teilen, zusammengesetzt sind, die stoffschlüssig verbunden sind, vorzugsweise mittels Kleben und/oder Löten und/oder Schweißen.

15. Fahrzeug, vorzugsweise Nutzfahrzeug, aufweisend die Energiespeichervorrichtung (10) nach einem der vorhergehenden Ansprüche.

## Claims

1. Energy storage device (10) for storing electrical energy, preferably for a vehicle at least partially electrically driven, comprising:
multiple storage cells (12, 14, 16) arranged in a stack-like manner;
a cooling plate (18) through which a coolant can flow, which is arranged laterally, preferably on a bottom side, with respect to the multiple storage cells (12, 14, 16);
multiple cooling bodies (22, 24) through which the coolant can flow, wherein one of the multiple cooling bodies (22, 24) is arranged between two adjacent storage cells (12, 14; 14, 16) in each case, and wherein the multiple cooling bodies (22, 24) are each in fluid communication with the cooling plate (18) and are furthermore each configured as a cooling body (22, 24) having a, preferably elastically, deformable shell (28); and
a pressure adjustment device (30) for adjusting a clamping force (36) acting on the multiple storage cells (12, 14, 16), **characterized in that** the pressure adjustment device (30) is configured to adjust a coolant pressure (34) in the multiple cooling bodies (22, 24) in dependence on an expansion state of the multiple storage cells (12, 14, 16) or of a variable correlated therewith, wherein the coolant pressure (34) acts on the storage cells (12, 14, 16) as the clamping force (36) via the deformable shell (28).

2. Energy storage device (10) according to claim 1, comprising a frame (38) for receiving the clamping force (36) acting on the multiple storage cells (12, 14, 16), wherein the frame (38) surrounds the multiple storage cells (12, 14, 16) and the multiple cooling bodies (22, 24) at least in sections.

3. Energy storage device (10) according to claim 2, wherein the frame (38) has two side sections (40) which lie opposite one another in a stacking direction (S) of the multiple storage cells (12, 14, 16), wherein the multiple storage cells (12, 14, 16) and the multiple cooling bodies (22, 24) can be clamped and/or wedged between the side sections (40) by the clamping force (36).

4. Energy storage device (10) according to claim 2 or 3, wherein the frame (38) has a frame region (42) for limiting an expansion movement of the multiple cooling bodies (22, 24) in a transverse direction (Q) and/or a vertical direction (H) of the energy storage device (10), wherein the frame region (42) is associated with head regions (44) of the multiple cooling bodies (22, 24) facing away from the cooling plate (18) and/or with flank regions (46) of the multiple cooling bodies (22, 24) lying opposite one another in the transverse direction (Q) and/or contacts the latter during operation of the energy storage device (10).

5. Energy storage device (10) according to any one of the preceding claims, wherein the pressure adjustment device (30) is configured to adjust the coolant pressure (34), in order to increase the service life of the energy storage device (10), such that the clamping force (36) acting on the storage cells (12, 14, 16) lies within a target range, wherein the target range is a target range that varies over the service life of the energy storage device (10).

6. Energy storage device (10) according to any one of the preceding claims, wherein the multiple cooling bodies (22, 24), in the installed state in the energy storage device (10), have substantially the same outer dimensions as the storage cells (12, 14, 16) as viewed in a transverse direction (Q) of the energy storage device (10) and/or in a vertical direction (H) of the energy storage device (10).

7. Energy storage device (10) according to any one of the preceding claims, wherein the pressure adjustment device (30) is configured to adjust the coolant pressure (34) such that mutually facing side faces of the two storage cells (12, 14; 14, 16) and of the cooling body (22, 24) arranged therebetween in each case abut against one another over their entire surface.

8. Energy storage device (10) according to any one of the preceding claims, comprising at least one further cooling body (20, 26), through which the coolant can flow, which is in fluid communication with the cooling plate (18) and is furthermore configured as a cooling body (20, 26) having a, preferably elastically, deformable shell (28), and which is arranged on an endface outer surface (48) of the storage cells (12, 14, 16) arranged in a stack-like manner, preferably between one of the side sections (40) of the frame (38) and the endface outer surface (48).

9. Energy storage device (10) according to any one of the preceding claims, wherein the deformable shell (28), in a non-installed state of the respective cooling body (22, 24), has a convex and/or bulging outer contour.

10. Energy storage device (10) according to claim 9, wherein the convex and/or bulging outer contour, in an installed state of the respective cooling body (22, 24), is deformed so as to form an interference fit between two adjacent storage cells (12, 14; 14, 16) and the cooling body (22, 24) arranged therebetween in each case.

11. Energy storage device (10) according to any one of the preceding claims, wherein the deformable shell (28) comprises an unalloyed aluminum material and/or an aluminum alloy, preferably having a copper content and/or a manganese content and/or a silicon content and/or a magnesium content.

12. Energy storage device (10) according to any one of the preceding claims, wherein the multiple cooling bodies (22, 24) each have an embossment (50) and/or an internal structure and/or a recess, which is configured to divide an interior space of the respective cooling body (22, 24) so as to conduct the coolant through the cooling body (22, 24) in a meandering and/or serpentine manner and/or with multiple deflections.

13. Energy storage device (10) according to any one of the preceding claims, wherein the multiple cooling bodies (22, 24) each have a coolant inlet (52) and a coolant outlet (54), via which the respective cooling body (22, 24) is in fluid communication with the cooling plate (18), wherein:
the coolant inlet (52) and the coolant outlet (54) are arranged at end regions (56) of the respective cooling body (22, 24) which lie opposite one another as viewed transversely to a stacking direction (S) of the storage cells (12, 14, 16); and/or
the coolant inlet (52) and the coolant outlet (54) are materially bonded, preferably adhesively bonded and/or soldered/brazed and/or welded, to the cooling plate (18) and/or to a coolant duct of the cooling plate (18).

14. Energy storage device (10) according to any one of the preceding claims, wherein the multiple cooling bodies (22, 24):
are each formed in one piece manner; or
are each composed of multiple, preferably half-shell-shaped, parts which are materially bonded, preferably by means of adhesive bonding and/or soldering/brazing and/or welding.

15. Vehicle, preferably a commercial vehicle, comprising the energy storage device (10) according to any one of the preceding claims.

## Revendications

1. Dispositif de stockage d'énergie (10) destiné à stocker de l'énergie électrique, de préférence pour un véhicule à entraînement au moins en partie électrique, comportant :
plusieurs cellules de stockage (12, 14, 16) disposées en pile ;
une plaque de refroidissement (18) pouvant être traversée par un fluide de refroidissement, qui est disposée latéralement, de préférence en bas, par rapport aux plusieurs cellules de stockage (12, 14, 16) ;
plusieurs corps de refroidissement (22, 24) pouvant être traversés par le fluide de refroidissement, un des plusieurs corps de refroidissement (22, 24) étant disposé entre deux cellules de stockage (12, 14 ; 14, 16) adjacentes et les plusieurs corps de refroidissement (22, 24) étant chacun en communication fluidique avec la plaque de refroidissement (18) et étant en outre chacun formés en tant que corps de refroidissement (22, 24) avec une enveloppe (28) de préférence déformable élastiquement ; et
un système de réglage de pression (30) destiné à régler une force de serrage (36) agissant sur les plusieurs cellules de stockage (12, 14, 16), **caractérisé en ce que** le système de réglage de pression (30) est formé pour régler une pression de fluide de refroidissement (34) dans les plusieurs corps de refroidissement (22, 24) en fonction d'un état d'expansion des plusieurs cellules de stockage (12, 14, 16) ou d'une grandeur corrélée à celui-ci, la pression de fluide de refroidissement (34) agissant sur les cellules de stockage (12, 14, 16) par l'enveloppe (28) déformable en tant que force de serrage (36).

2. Dispositif de stockage d'énergie (10) selon la revendication 1, comportant un cadre (38) destiné à recevoir la force de serrage (36) agissant sur les plusieurs cellules de stockage (12, 14, 16), le cadre (38) entourant au moins par sections les plusieurs cellules de stockage (12, 14, 16) et les plusieurs corps de refroidissement (22, 24).

3. Dispositif de stockage d'énergie (10) selon la revendication 2, le cadre (38) comportant deux sections latérales (40) qui se font face l'une l'autre dans une direction d'empilement (S) des plusieurs cellules de stockage (12, 14, 16), les plusieurs cellules de stockage (12, 14, 16) et les plusieurs corps de refroidissement (22, 24) pouvant être serrés et/ou coincés par la force de serrage (36) entre les sections latérales (40).

4. Dispositif de stockage d'énergie (10) selon la revendication 2 ou 3, le cadre (38) comportant une zone de cadre (42) destinée à limiter un mouvement d'expansion des plusieurs corps de refroidissement (22, 24) dans une direction transversale (Q) et/ou une direction verticale (H) du dispositif de stockage d'énergie (10), la zone de cadre (42) étant associée à des zones de tête (44) des plusieurs corps de refroidissement (22, 24) opposées à la plaque de refroidissement (18) et/ou à des zones de flanc (46) des plusieurs corps de refroidissement (22, 24) faisant face dans la direction transversale (Q) et/ou entrant en contact avec celles-ci lors du fonctionnement du dispositif de stockage d'énergie (10).

5. Dispositif de stockage d'énergie (10) selon l'une des revendications précédentes, le système de réglage de pression (30) étant formé pour régler la pression de fluide de refroidissement (34) pour augmenter la durée de vie du dispositif de stockage d'énergie (10) de telle sorte que la force de serrage (36) agissant sur les cellules de stockage (12, 14, 16) se situe dans une plage de consigne, la plage de consigne étant une plage de consigne variant pendant la durée de vie du dispositif de stockage d'énergie (10).

6. Dispositif de stockage d'énergie (10) selon l'une des revendications précédentes, les plusieurs corps de refroidissement (22, 24), lorsqu'ils sont montés dans le dispositif de stockage d'énergie (10), vus dans une direction transversale (Q) du dispositif de stockage d'énergie (10) et/ou dans une direction verticale (H) du dispositif de stockage d'énergie (10), comportant sensiblement les mêmes dimensions extérieures que les cellules de stockage (12, 14, 16).

7. Dispositif de stockage d'énergie (10) selon l'une des revendications précédentes, le système de réglage de pression (30) étant formé pour régler la pression de fluide de refroidissement (34) de telle sorte que des surfaces latérales tournées l'une vers l'autre des deux cellules de stockage (12, 14 ; 14, 16) et du corps de refroidissement (22, 24) disposé entre elles respectivement reposent l'une contre l'autre sur toute la surface.

8. Dispositif de stockage d'énergie (10) selon l'une des revendications précédentes, comportant au moins un autre corps de refroidissement (20, 26) pouvant être traversé par le fluide de refroidissement, qui est en communication fluidique avec la plaque de refroidissement (18) et est formé en outre en tant que corps de refroidissement (20, 26) avec une enveloppe (28) de préférence élastiquement déformable, et qui est disposé sur une surface extérieure (48) côté frontal des cellules de stockage (12, 14, 16) disposées en pile, de préférence entre une des sections latérales (40) du cadre (38) et la surface extérieure (48) côté frontal.

9. Dispositif de stockage d'énergie (10) selon l'une des revendications précédentes, l'enveloppe (28) déformable comportant un contour extérieur convexe et/ou bombé dans un état non monté du corps de refroidissement (22, 24) respectif.

10. Dispositif de stockage d'énergie (10) selon la revendication 9, **caractérisé en ce que** le contour extérieur convexe et/ou bombé est déformé dans un état monté du corps de refroidissement (22, 24) respectif pour former un ajustement serré entre deux cellules de stockage (12, 14 ; 14 ; 16) adjacentes et le corps de refroidissement (22, 24) disposé entre elles respectivement.

11. Dispositif de stockage d'énergie (10) selon l'une des revendications précédentes, l'enveloppe (28) déformable comportant un matériau d'aluminium non allié et/ou un alliage d'aluminium, de préférence avec une teneur en cuivre et/ou une teneur en manganèse et/ou une teneur en silicium et/ou une teneur en magnésium.

12. Dispositif de stockage d'énergie (10) selon l'une des revendications précédentes, les plusieurs corps de refroidissement (22, 24) comportant chacun un gaufrage (50) et/ou une structure intérieure et/ou un creux qui est formé/formée pour subdiviser un espace intérieur du corps de refroidissement (22, 24) respectif pour acheminer le fluide de refroidissement en méandres et/ou en serpentin et/ou de manière déviée plusieurs fois à travers le corps de refroidissement (22, 24).

13. Dispositif de stockage d'énergie (10) selon l'une des revendications précédentes, les plusieurs corps de refroidissement (22, 24) comportant chacun une entrée (52) de fluide de refroidissement et une sortie (54) de fluide de refroidissement, par lesquelles le corps de refroidissement (22, 24) respectif est en communication fluidique avec la plaque de refroidissement (18) :
l'entrée (52) de fluide de refroidissement et la sortie (54) de fluide de refroidissement étant disposées sur des zones d'extrémité (56) se faisant face du corps de refroidissement (22, 24) respectif, vues transversalement par rapport à une direction d'empilement (S) des cellules de stockage (12, 14, 16) ; et/ou
l'entrée (52) de fluide de refroidissement et la sortie (54) de fluide de refroidissement étant reliées par liaison de matière, de préférence collées et/ou brasées et/ou soudées, à la plaque de refroidissement (18) et/ou à un guide de fluide de refroidissement de la plaque de refroidissement (18).

14. Dispositif de stockage d'énergie (10) selon l'une des revendications précédentes, les plusieurs corps de refroidissement (22, 24) :
étant réalisés chacun en une seule pièce ; ou
étant composés chacun de plusieurs parties, de préférence en forme de demi-coque, qui sont reliées par liaison de matière, de préférence par collage et/ou brasage et/ou soudage.

15. Véhicule, de préférence véhicule utilitaire, comportant le dispositif de stockage d'énergie (10) selon l'une des revendications précédentes.
